(19) Europäisches Patentamt
European Patent Office
Office européen des brevets

(11) **EP 4 446 139 A1**

(12) **EUROPEAN PATENT APPLICATION**

(43) Date of publication:
**16.10.2024 Bulletin 2024/42**

(51) International Patent Classification (IPC):
***B60C 23/06*** (2006.01)

(21) Application number: **24164744.5**

(52) Cooperative Patent Classification (CPC):
**B60C 23/062**

(22) Date of filing: **20.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 JP 2023065065**

(71) Applicant: **Sumitomo Rubber Industries, Ltd.**
**Kobe-shi, Hyogo 651-0072 (JP)**

(72) Inventors:
• **YAMASHITA, Kento**
**Chuo-ku, 651-0072 (JP)**
• **MURAKAMI, Keiichi**
**Chuo-ku, 651-0072 (JP)**

(74) Representative: **TBK**
**Bavariaring 4-6**
**80336 München (DE)**

(54) **MONITORING DEVICE OF STATE OF VEHICLE DURING TRAVELING**

(57)     A monitoring device includes an acquisition unit, a filtering unit, an estimation unit, and a correction unit. The acquisition unit acquires time series data representing rotation information of a tire mounted on a vehicle during traveling of the vehicle. The filtering unit causes the time series data to pass through a variable band-pass filter to extract a frequency component in a predetermined frequency band near a resonance frequency of the tire from the time series data or causes the time series data to pass through a variable band-stop filter to remove the frequency component in the predetermined frequency band near the resonance frequency. The estimation unit estimates the resonance frequency of the tire based on the frequency component to derive an estimated resonance frequency. The correction unit corrects the estimated resonance frequency based on an area of a spectrum of the time series data in the predetermined frequency band.

EP 4 446 139 A1

**Description**

FIELD OF INVENTION

The present invention relates to a monitoring device of a state of a vehicle during traveling, a program, and a method.

BACKGROUND

Adjusting air pressure of a tire is important for comfortable traveling of a vehicle. This is because, if the air pressure falls below a proper value, it possibly causes problems of poor ride comfort and fuel consumption. In view of this, conventionally, a system that automatically detects a pressure reduction of a tire (Tire Pressure Monitoring System: TPMS) is studied. Information on a pressure reduction of a tire can be, for example, used for an alarm for a driver.
In addition to a method of directly measuring air pressure of a tire by, for example, mounting a pressure sensor on the tire, a method to detect the pressure reduction of the tire includes a method that indirectly evaluates a pressure reduction of a tire using another index value. As one of such an indirect evaluation method, a Resonance Frequency Method (RFM) has been known. The RFM uses a change in resonance frequency characteristics of a tire included in a wheel speed signal due to a pressure reduction.
As one estimation method of a resonance frequency of a tire, for example, there is a method that performs time series analysis on a wheel speed signal acquired as time-series data based on a K-order autoregressive (AR) model. However, when a noise peak different from a resonance peak of the tire is present in a bandwidth in which the AR model is applied, the resonance frequency derived based on the AR model is affected by the noise peak to be displaced from a true resonance frequency of the tire. However, to avoid the noise peak, when the bandwidth in which the AR model is applied is set to be narrow, this possibly results in deterioration of estimation accuracy of the resonance frequency.
Using the point as a problem, JP2020-026160A discloses a technique that cancels an influence of noise from sensing data regarding a vibration state of a vehicle during traveling while a search range of a resonance frequency is maintained and allows accurately calculating the resonance frequency. Specifically, the sensing data of a wheel speed is caused to pass through a fixed band-pass filter to extract a component in a first frequency band of the sensing data. The first frequency band is a band near the resonance frequency of the tire and has some extent of a wide search range. Next, the extracted component of the first frequency band is caused to pass through a variable band-pass filter to extract a frequency component in a second frequency band narrower than the first frequency band. Based on the extracted frequency component in the second frequency band, the resonance frequency of the tire is estimated while the influence of noise is reduced.

SUMMARY OF INVENTION

In the variable band-pass filter, a pass frequency band thereof is determined such that an area of a spectrum of the sensing data passing through the filter is maximized. In view of this, when noise at an amplitude larger than or having a magnitude close to a torsional resonance peak is present near a torsional resonance frequency, the pass frequency band of the variable band-pass filter is possibly displaced in a direction close to the noise. In this case, the torsional resonance frequency estimated by the method disclosed in JP2020-026160A is possibly affected by noise.
An object of the present invention is to provide a technique that reduces an influence of noise and accurately estimates a resonance frequency of a tire.
A monitoring device according to a first aspect of the present invention is a monitoring device that monitors a state of a vehicle during traveling. The monitoring device includes an acquisition unit, a filtering unit, an estimation unit, and a correction unit. The acquisition unit acquires time series data representing rotation information of a tire mounted on the vehicle during traveling of the vehicle. The filtering unit causes the time series data to pass through a variable band-pass filter to extract a frequency component in a predetermined frequency band near a resonance frequency of the tire from the time series data, or causes the time series data to pass through a variable band-stop filter to remove the frequency component in the predetermined frequency band near the resonance frequency of the tire from the time series data. The estimation unit estimates the resonance frequency of the tire based on the frequency component to derive an estimated resonance frequency. The correction unit corrects the estimated resonance frequency based on an area of a spectrum of the time series data in the predetermined frequency band.
The monitoring device according to a second aspect is a monitoring device according to the first aspect in which the filtering unit causes the time series data to pass through the variable band-pass filter to extract the frequency component in the predetermined frequency band from the time series data. The correction unit calculates a correction index as a ratio between an area of a spectrum of the time series data in a first frequency band at a low-frequency wave side from a center frequency of a passband of the variable band-pass filter and an area of a spectrum of the time series data in a second frequency band at a high-frequency wave side from the center frequency to correct the estimated resonance frequency based on the correction index.

The monitoring device according to a third aspect is a monitoring device according to the first aspect or the second aspect in which the correction unit corrects the estimated resonance frequency further based on a coefficient identifying a linear relationship between the estimated resonance frequency and the correction index.

The monitoring device according to a fourth aspect is a monitoring device according to any of the first aspect to the third aspect in which the first frequency band and the second frequency band have widths of 6 Hz or more and 12 Hz or less.

The monitoring device according to a fifth aspect is a monitoring device according to any of the first aspect to the fourth aspect that further includes a pressure reduction detection unit that detects a pressure reduction of the tire based on the estimated resonance frequency corrected by the correction unit.

A program according to a sixth aspect is a program that monitors a state of a vehicle during traveling. The program causes one or a plurality of computers to execute:

(1) acquiring time series data representing rotation information of a tire mounted on the vehicle during traveling of the vehicle;
(2) causing the time series data to pass through a variable band-pass filter to extract a frequency component in a predetermined frequency band near a resonance frequency of the tire from the time series data, or causing the time series data to pass through a variable band-stop filter to remove the frequency component in the predetermined frequency band near the resonance frequency of the tire from the time series data;
(3) estimating the resonance frequency of the tire based on the frequency component to derive an estimated resonance frequency; and
(4) correcting the estimated resonance frequency based on an area of a spectrum of the time series data in the predetermined frequency band.

A method according to a seventh aspect is a method that monitors a state of a vehicle during traveling. The method includes:

(1) acquiring time series data representing rotation information of a tire mounted on the vehicle during traveling of the vehicle;
(2) causing the time series data to pass through a variable band-pass filter to extract a frequency component in a predetermined frequency band near a resonance frequency of the tire from the time series data, or causing the time series data to pass through a variable band-stop filter to remove the frequency component in the predetermined frequency band near the resonance frequency of the tire from the time series data;
(3) estimating the resonance frequency of the tire based on the frequency component to derive an estimated resonance frequency; and
(4) correcting the estimated resonance frequency based on an area of a spectrum of the time series data in the predetermined frequency band.

According to the present invention, an influence of noise is reduced and the resonance frequency of the tire can be accurately estimated.

BRIEF DESCRIPTION OF DRAWINGS

FIG. 1 is a schematic diagram illustrating a state in which a monitoring device according to one embodiment of the present invention is mounted on a vehicle.
FIG. 2 is a block diagram illustrating an electrical configuration of the monitoring device.
FIG. 3 is a flowchart depicting a procedure of a pressure reduction detection process.
FIG. 4 is a diagram describing a relationship between a center frequency of VBPF and an area of a spectrum.
FIG. 5 is a graph plotting a data set of a correction index and an estimated torsional resonance frequency.
FIG. 6A is a graph plotting a traveling time and a speed of a vehicle performed in an experiment.
FIG. 6B is a graph of estimated torsional resonance frequencies in time series according to a working example and a comparative example.

DETAILED DESCRIPTION OF THE PREFERRED EMBODIMENTS

Hereinafter, a monitoring device, a program, and a method according to an embodiment of the present invention will be described with reference to the drawings.

<1. Configuration of Monitoring Device>

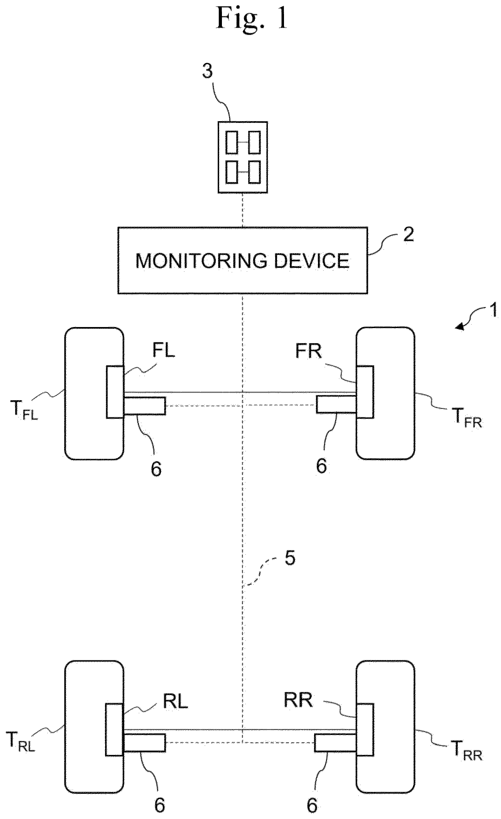

FIG. 1 is a schematic diagram illustrating a state in which a monitoring device 2 according to the embodiment is mounted on a vehicle 1. The monitoring device 2 is achieved as a control unit (in-vehicle computer) mounted on the vehicle 1 to monitor the state of the vehicle 1 during traveling. The vehicle 1 is a four-wheeled vehicle and includes a left front wheel FL, a right front wheel FR, a left rear wheel RL, and a right rear wheel RR. The monitoring device 2 has a function of detecting a pressure reduction of at least one of tires $T_{FL}$, $T_{FR}$, $T_{RL}$, $T_{RR}$ mounted on these wheels and when a pressure reduction of the tire $T_{FL}$, $T_{FR}$, $T_{RL}$, $T_{RR}$ is detected, the monitoring device 2 alarms the fact via an alarm indicator 3 mounted on the vehicle 1. Details of such a procedure of a pressure reduction detection process will be described later.

The pressure reduction states of the tires $T_{FL}$, $T_{FR}$, $T_{RL}$, $T_{RR}$ are detected based on wheel speeds of the left front wheel FL, the right front wheel FR, the left rear wheel RL, and the right rear wheel RR (that is, rotation speeds of the tires $T_{FL}$, $T_{FR}$, $T_{RL}$, $T_{RR}$). A wheel speed sensor 6 is mounted on each of the left front wheel FL, the right front wheel FR, the left rear wheel RL, and the right rear wheel RR. Each of the wheel speed sensors 6 outputs a wheel speed signal representing a wheel speed of a wheel on which itself is mounted at a predetermined sampling cycle. That is, the wheel speed signal is data representing rotation information of the tires $T_{FL}$, $T_{FR}$, $T_{RL}$, $T_{RR}$. The wheel speed sensor 6 is connected to the monitoring device 2 via a communication line 5, and the wheel speed signal output from hour to hour from the wheel speed sensor 6 is transmitted to the monitoring device 2 in real-time via the communication line 5. Thus, the wheel speed signal in time series acquired by the monitoring device 2 becomes time series data representing the rotation information of the tires $T_{FL}$, $T_{FR}$, $T_{RL}$, $T_{RR}$.

As the wheel speed sensors 6, as long as the wheel speeds of the wheels FL, FR, RL, RR during traveling can be detected, any wheel speed sensor can be used. For example, a sensor of a type that measures the wheel speed from an output signal of an electromagnetic pick-up can be used, or a sensor of a type that generates electricity using rotation, such as a dynamo, and measures the wheel speed from voltage at this time can be used. A mounting position of the wheel speed sensor 6 is also not specifically limited, and as long as the wheel speed can be detected, the mounting position can be appropriately selected according to the type of the sensor.

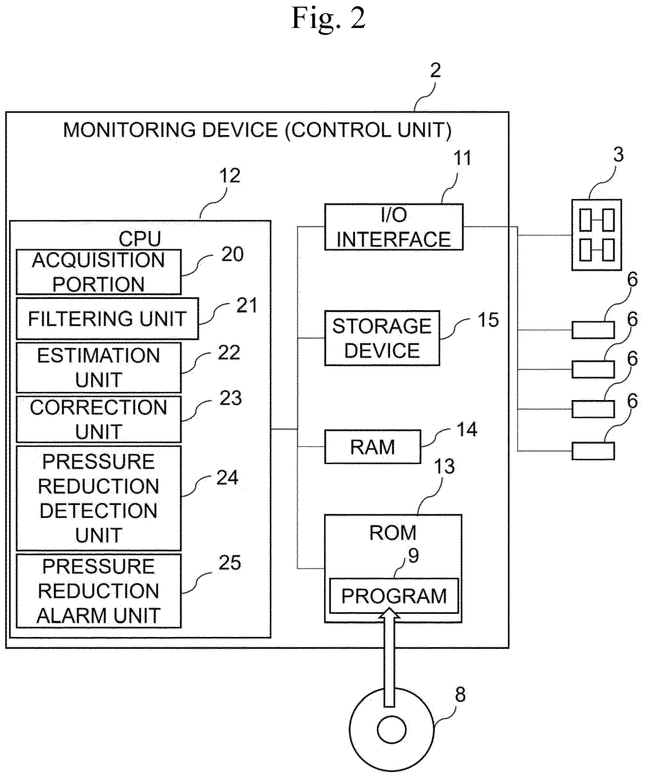

FIG. 2 is a block diagram illustrating an electrical configuration of the monitoring device 2. The monitoring device 2 is a control unit mounted on the vehicle 1 as hardware, and as illustrated in FIG. 2, includes an I/O interface 11, a CPU 12, a ROM 13, a RAM 14, and a non-volatile, rewritable storage device 15. The I/O interface 11 is a communication device that achieves communications with an external device, such as the wheel speed sensor 6 and the alarm indicator 3. The ROM 13 stores a program 9 for controlling an operation of each unit of the vehicle 1. The program 9 is written from a storage medium 8, such as a CD-ROM, to the ROM 13. The CPU 12 reads the program 9 from the ROM 13 and executes it to virtually operate as an acquisition unit 20, a filtering unit 21, an estimation unit 22, a correction unit 23, a pressure reduction detection unit 24, and a pressure reduction alarm unit 25. Details of operations of the respective units 20 to 25 will be described later. The storage device 15 is configured by a hard disk, a flash memory, and the like. Note that a storage location of the program 9 is not the ROM 13 but may be the storage device 15. The RAM 14 and the storage device 15 are appropriately used for an operation of the CPU 12.

As long as a fact that a pressure reduction of a tire occurs can be delivered to a user, the alarm indicator 3 is not specifically limited, and, for example, the alarm indicator 3 can be achieved by any given aspect, such as lamps corresponding to the four wheels FL, FR, RL, RR, a liquid crystal display element, a liquid crystal monitor, an organic EL display, and a plasma display. Although a mounting position of the alarm indicator 3 can be appropriately selected, for example, the alarm indicator 3 is preferably disposed at a position easily recognized by a driver, such as on an instrument panel. When the control unit (monitoring device 2) is connected to a car navigation system, a monitor for car navigation can be used as the alarm indicator 3. When the monitor is used as the alarm indicator 3, an alarm can be an icon and character information displayed on the monitor.

<2. Pressure Reduction Detection Process>

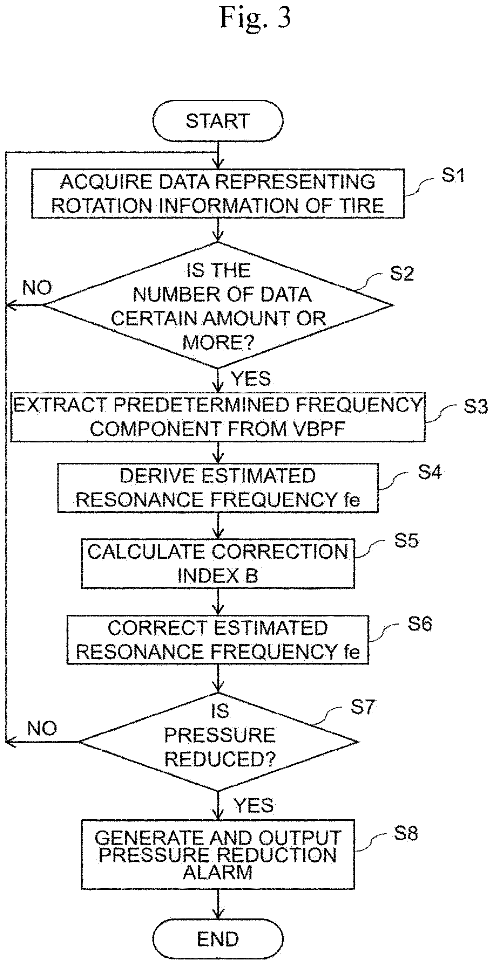

Hereinafter, with reference to FIG. 3, the pressure reduction detection process for detecting a pressure reduction of at least one of the tires $T_{FL}$, $T_{FR}$, $T_{RL}$, $T_{RR}$ will be described. The pressure reduction detection process depicted in FIG. 3, for example, starts when the vehicle 1 starts traveling, is repeatedly performed during traveling of the vehicle, and terminates when the traveling stops. This process is the pressure reduction detection process of a resonance frequency method (RFM), and the RFM uses a change in a torsional resonance frequency f of the tire when air pressure of the tire changes. Accordingly, in this process, as described later, the torsional resonance frequency f of the tire is estimated and the pressure reduction of the tire is detected based on this. Note that, hereinafter, for simplification, a state in which the pressure reduction of the left front wheel tire $T_{FL}$ is detected will be described, but the similar process is performed on the remaining tires $T_{FR}$, $T_{RL}$, $T_{RR}$.

First, the acquisition unit 20 acquires the wheel speed signal transmitted from hour to hour from the wheel speed sensor 6 mounted on the wheel FL as data representing rotation information of the tire $T_{FL}$ (Step S1). The data acquired here is received via the I/O interface 11 and is temporarily stored in the RAM 14 or stored in the storage device 15.

Next, the acquisition unit 20 determines whether or not the data representing the rotation information is accumulated by a certain amount or more (Step S2). When it is determined that the data representing the rotation information is accumulated by a predetermined amount or more (YES), Step S3 is performed. When it is determined that the data representing the rotation information is not accumulated by the predetermined amount or more (NO), Step S 1 is repeated. Thus, prior to performing Step S3, the data representing the rotation information is temporarily stored in the RAM 14 or stored in the storage device 15 as the time series data.

Next, by the filtering unit 21 causing the time series data representing the rotation information to pass through the variable band-pass filter (VBPF), a frequency component in a predetermined frequency band is dynamically extracted from the time series data accumulated in Step S 1 (Step S3). A width of the frequency band (passband) that passes through the variable band-pass filter is preliminarily determined and can be, for example, a width of 5 Hz to 20 Hz. The filtering unit 21 may appropriately perform preprocessing, such as active noise control, on the time series data representing the rotation information before passing through the variable band-pass filter. The filtering unit 21 of the embodiment first applies a low-pass filter to the time series data accumulated in Step S 1, and after that performs the first decimation (downsampling). Subsequently, a high-pass filter is applied to the data after decimation and the second decimation is performed. The filtering unit 21 of the embodiment applies the variable band-pass filter to the data that underwent these processes. That is, the time series data caused to pass through the variable band-pass filter in Step S2 is not limited to the data having undergone the above-described process but includes data generated by appropriately processing data acquired from the signal of the wheel speed sensor 6.

The variable band-pass filter is one kind of a band-pass filter and is a filter that adaptationally changes a center frequency fc of the filter such that an area of a spectrum of the time series data passing through the filter is maximized. As an adaptive algorithm of this filter, for example, an NLMS algorithm can be used. While the filtering unit 21 moves the variable band-pass filter in a predetermined frequency band, for example, in a frequency band of 30 Hz to 60 Hz, the filtering unit 21 determines the center frequency fc such that the area of the spectrum of the time series data passing through the filter is maximized and extracts the component in the frequency band determined in this manner. Note that the area of the spectrum in a certain frequency band means an integral value of an amplitude of the spectrum in the frequency band.

Next, the estimation unit 22 derives an estimated torsional resonance frequency fe as a value of estimating a torsional resonance frequency of the tire based on the frequency component of the time series data that has passed through the variable band-pass filter (Step S4). Although a derivation method of the estimated torsional resonance frequency fe is not specifically limited, in the embodiment, time series analysis is performed on the frequency component extracted in Step S3 by a Kalman filter based on a second-order autoregressive (AR) model, and a peak frequency is determined as the estimated torsional resonance frequency fe. Alternatively, time series analysis is performed on the frequency component by the Kalman filter based on a high-order (third order or more) autoregressive (AR) model. Subsequently, from a parameter of the estimated AR model and the time series data used for the estimation, an input signal that can be assumed to be given to the model is restored. After an appropriate signal process, such as the band-pass filter, is performed on this input signal and the output signal (time series data), a system is determined by the Kalman filter based on a second-order Autoregressive Moving Average (ARMA) model. The peak frequency at this time may be determined as the estimated torsional resonance frequency fe. Note that the method for calculating the resonance frequency by the high-order AR model and the high-order ARMA model is publicly known, and therefore the detailed description will be omitted here. However, when necessity, see JP2011-102077A.

In a case where the largest peak in the pass frequency band of the variable band-pass filter is the torsional resonance frequency f of the tire, the pass frequency band finally determined follows the torsional resonance frequency f and the torsional resonance frequency f appears near the center frequency fc. An error of the estimated torsional resonance frequency fe relative to the torsional resonance frequency f is comparatively small. On the other hand, when a torsional resonance peak and a noise peak that is larger than or has a magnitude close to the torsional resonance peak is present in the pass frequency band, the pass frequency band finally determined is affected by a noise frequency fn. Specifically, when the noise peak is present, the center frequency fc is displaced to a noise frequency fn side from the proximity of the torsional resonance frequency f, and the error of the estimated torsional resonance frequency fe relative to the torsional resonance frequency f is comparatively large.

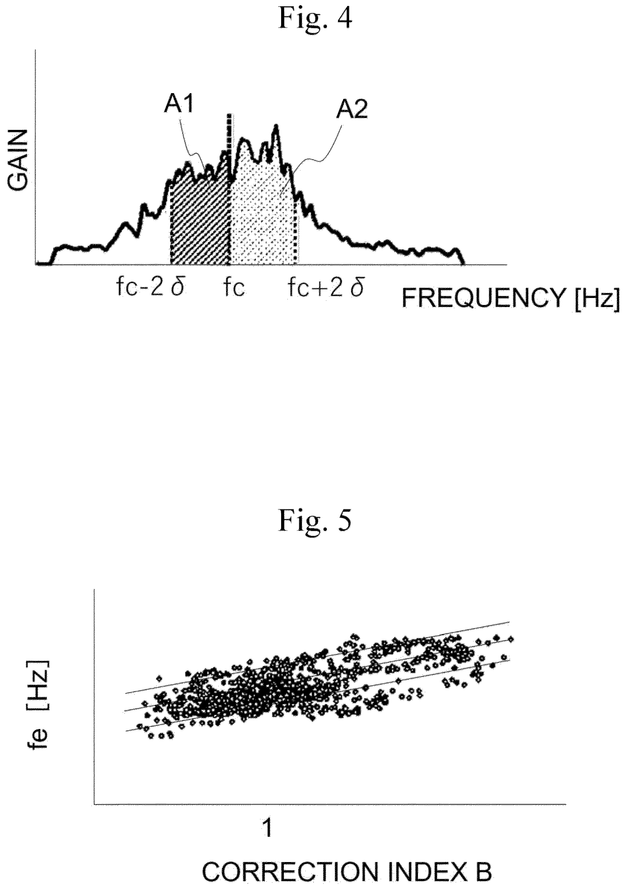

Furthermore, when noise is present near the torsional resonance frequency f, areas of the spectra in frequency bands at both sides of the center frequency fc of the variable band-pass filter become larger in the frequency band at a side where the noise frequency fn is present. FIG. 4 is a diagram describing this. In an example illustrated in FIG. 4, the noise frequency fn is present at a high-frequency wave side of the center frequency fc. At this time, an area A1 of the spectrum in a frequency band (fc - $2\delta$) to fc becomes smaller than an area A2 of the spectrum in a frequency band fc to (fc + $2\delta$). On the contrary, when the noise frequency fn is present at a low-frequency wave side of the center frequency fc, the area A1 becomes larger than the area A2.

Defining a correction index B = A2/A1, which is a ratio between A2 and A1, using this, the correction index B serves as an index indicative of whether or not noise affecting the pass frequency band of the variable band-pass filter is generated or whether the noise frequency fn is at the low-frequency wave side or the high-frequency wave side of the center frequency fc. For example, when the correction index B is close to 1, it is considered that noise affecting the pass frequency band of the variable band-pass filter is not generated and the center frequency fc is near the torsional resonance frequency f. In contrast to this, when the correction index B is displaced from 1 by a predetermined value or more, noise is considered to be generated near the torsional resonance frequency f. Furthermore, when the correction index B is larger than 1, it is considered that noise is generated at the high-frequency wave side of the center frequency fc, and when the correction index B is smaller than 1, it is considered that noise is generated at the low-frequency wave side of the center frequency fc.

Based on the large number of data sets of the estimated torsional resonance frequency fe estimated based on the time-series data that has passed through the band-pass filter and the correction index B, the inventors found that the correction index B and the estimated torsional resonance frequency fe regress to a linear relationship as illustrated in FIG. 5. FIG. 5 is a graph plotting the large number of data sets of the correction index B and the estimated torsional resonance frequency fe estimated by the estimation unit 22. As seen from FIG. 5, although the estimated torsional resonance frequency fe has a constant width in the case of the correction index B being 1 as well, a gradient d of a regression line of the correction index B and the estimated torsional resonance frequency fe may be said to be almost constant. In view of this, in the vehicle 1, as long as the gradient d identifying the linear relationship between the correction index B and the estimated torsional resonance frequency fe is preliminarily identified, the estimated torsional resonance frequency fe can be corrected using the estimated torsional resonance frequency fe, the correction index B, and the gradient d.

With reference to FIG. 3 again, in the subsequent Step S5, the correction unit 23 calculates the correction index B. The correction unit 23 first determines a first frequency band (W1) at the low-frequency side and a second frequency band (W2) at the high-frequency side based on the center frequency fc of the variable band-pass filter determined in Step S3. Defining a predetermined constant as $\delta$, the frequency bands W1 and W2 can be determined by (fc - $2\delta$) to fc and fc to (fc + $2\delta$), respectively. That is, the frequency bands W1 and W2 are frequency bands having (fc - $\delta$) and (fc + $\delta$) as the center frequencies, respectively, and having a width $2\delta$. The constant $\delta$ is preferably 3 Hz or more and 6 Hz or less, and the frequency bands W1 and W2 are preferably in a range from 6 Hz or more to 12 Hz or less. In the embodiment, the correction unit 23 causes data before passing through the variable band-pass filter in Step S3, that is, data before to which the NLMS algorithm is applied, to pass through the fixed band-pass filter that causes a frequency component of the frequency band W1 to pass through and calculates the area A1 of the extracted frequency component. The correction unit 23 similarly causes the data before to which the NLMS algorithm is applied in Step S3 to pass through the fixed band-pass filter that causes a frequency component of the frequency band W2 to pass through and calculates the area A2 of the extracted frequency component. Here, in the embodiment, the areas A1 and A2 are calculated through application of the Parseval's theorem. However, the calculation method of the area is not limited to this, and, for example, the calculation can be performed by application of a method, such as high-speed Fourier transformation. The correction unit 23 calculates the correction index B based on the areas A1 and A2.

Next, the correction unit 23 corrects the estimated torsional resonance frequency fe based on the correction index B, the estimated torsional resonance frequency fe, and the gradient d (Step S6). The gradient d is preliminarily identified based on data acquired before shipping the vehicle 1 in the embodiment, and is preliminarily stored in the storage device 15 or the ROM 13. The correction unit 23 calculates a corrected estimated torsional resonance frequency fe' based on the following formula.

$$\mathrm{fe'} = \mathrm{fe} - (\mathrm{B} - 1)\mathrm{d}$$

Next, the pressure reduction detection unit 24 detects the pressure reduction of the tire $T_{FL}$ based on the corrected estimated torsional resonance frequency fe' (Step S7). Here, a pressure reduction threshold value of the corrected estimated torsional resonance frequency fe' for determination that the pressure of tire $T_{FL}$ is reduced is preliminarily determined by an experiment or a simulation and is preliminarily stored in the storage device 15 or the ROM 13. The pressure reduction detection unit 24 compares the corrected estimated torsional resonance frequency fe' with the pressure reduction threshold value and determines that the pressure of the tire $T_{FL}$ is not reduced (NO), when the corrected estimated torsional resonance frequency fe' is the pressure reduction threshold value or more, or when the corrected estimated torsional resonance frequency fe' is more than the pressure reduction threshold value. The process returns to Step S1 and the steps up to the present are performed again.

When the corrected estimated torsional resonance frequency fe' is less than the pressure reduction threshold value, or when the corrected estimated torsional resonance frequency fe' is the pressure reduction threshold value or less in Step S7, the pressure reduction detection unit 24 determines that the pressure of the tire $T_{FL}$ is reduced (YES). In this case, the subsequent Step S8 is performed.

In Step S8, the pressure reduction alarm unit 25 generates a pressure reduction alarm that notifies the driver of the pressure reduction of the tire $T_{FL}$ and outputs this via the alarm indicator 3 or the like. The alarm may be a character indicating the pressure reduction of the tire $T_{FL}$ or may be a predetermined icon or graphic. The pressure reduction alarm unit 25 may alarm the pressure reduction by, for example, lighting a lamp of the alarm indicator 3 corresponding to the tire $T_{FL}$. In addition to or instead of this, the pressure reduction alarm unit 25 may generate the pressure reduction alarm in an aspect, such as a voice and a buzzer sound, and output it from a speaker of the vehicle 1 or the like.

<3. Feature>

The monitoring device 2 according to the embodiment corrects the estimated torsional resonance frequency fe using the influence of the noise frequency fn on the center frequency fc of the variable band-pass filter. Thus, even when the noise peak is present in the pass frequency band of the variable band-pass filter, the influence of the noise is canceled and the torsional resonance frequency f of the tire can be accurately estimated. Eventually, accuracy of the pressure reduction detection based on the RFM can be improved.

Here, assume a case where the fixed band-pass filter is used as the variable band-pass filter. In this case as well, by calculating the correction index of the time series data that has passed through the pass frequency band of the fixed band-pass filter based on the area of the spectrum at the low-frequency wave side and the area of the spectrum at the high-frequency wave side of the assumed torsional resonance frequency f, the influence of noise can be canceled from the estimated torsional resonance frequency fe. However, when the actual torsional resonance frequency f of the tire has been changed by the pressure reduction of the tire, the influence of the noise and the influence of the pressure reduction cannot be isolated, and an amount of change of the torsional resonance frequency f by the pressure reduction is possibly corrected. Therefore, in the embodiment, the variable band-pass filter in which the center frequency changes following the change in the actual torsional resonance frequency f of the tire and the influence of the noise is selectively reflected to the correction index B is preferably used.

<4. Modification>

While one embodiment of the present invention has been described above, the present invention is not limited to the embodiments and can be variously changed without departing from the gist. For example, the following changes can be made. Additionally, the gist of the following modifications can be appropriately combined.

(1) In the embodiment, to detect the pressure reduction of the tire, using the wheel speed signal, the estimated torsional resonance frequency fe' is derived. However, the algorithm is applicable to other situations. For example, to determine a ride comfort and a state of vibration of the vehicle (for example, shimmy and shake), a state of a road surface where the vehicle travels, a state of a failure of the tire (including abrasion), and the like, there may be a situation in which deriving the peak frequency and a peak level from the wheel speed signal is similarly required, and in this situation as well, the method from Steps S2 to S6 is applicable.

(2) In the embodiment, the data representing the rotation information of the tire is the data of the wheel speed. However, the data representing the rotation information of the tire may be data of a rotation acceleration of the wheel. The data of the rotation acceleration of the wheel is acquired by temporal differentiation of the wheel speed.

(3) Instead of the variable band-pass filter of the embodiment, a variable band-stop filter that removes a frequency component in a predetermined frequency band near the torsional resonance frequency f of the tire may be used. The variable band-stop filter is one kind of a band-stop filter and is a filter that adaptationally changes the center frequency of the filter using the NLMS algorithm or the like such that the area of the spectrum of the time series data removed by the filter is maximized. While the filtering unit 21 moves the variable band-stop filter in the predetermined frequency band, for example, in the frequency band from 30 Hz to 60 Hz, the filtering unit 21 determines the frequency band in which the area of the spectrum of the time series data removed by the filter is maximized and removes the component of the frequency band thus determined. The center frequency of this frequency band can be used as the center frequency fc. The estimation unit 22 may define the fixed band-pass filter that causes the component of the frequency band determined at this time to pass through, cause the time series data representing the rotation information of the tire to pass through this fixed band-pass filter, and derive the estimated torsional resonance frequency fe of the frequency component that has passed through the fixed band-pass filter by the procedure similar to Step S4.

(4) The correction index B may be defined by A1/A2. The gradient d may be identified based on data acquired at an appropriate timing after shipping the vehicle 1.

(5) The monitoring device 2 may include one or a plurality of computers achieving functions of the acquisition unit 20, the filtering unit 21, the estimation unit 22, the correction unit 23, the pressure reduction detection unit 24, and the pressure reduction alarm unit 25, and at least a part of steps of Steps S1 to S8 may be executed by the respective different computers. One or the plurality of computers included in the monitoring device 2 may be any of an in-vehicle computer and a computer outside the vehicle 1 or may be both. That is, the monitoring device 2 need not be mounted on the vehicle 1. Examples of the computers outside the vehicle 1 include a computer attached to the wheel speed sensor 6, a server computer communicatively connected to the wheel speed sensor 6, and others. The wheel speed sensor 6 may be wirelessly connected to the monitoring device 2 as the in-vehicle computer.

(6) In the embodiment, the frequency bands W1 and W2 are the frequency bands having the center frequencies (fc - $\delta$) and (fc + $\delta$), respectively, and having the width $2\delta$. However, the widths of the frequency bands W1 and W2 are not limited to be $2\delta$ and may be a value $\gamma$ independent from $\delta$. That is, the frequency bands W1 and W2 may be the frequency bands having the center frequencies (fc - $\delta$) and (fc + $\delta$), respectively, and having the width $\gamma$.

EXAMPLES

The following will describe the working example of the present invention in detail. However, the present invention is not limited to the following working example.

<Experimental Condition>

European ordinary roads were traveled by a front-engine, front-drive (FF) vehicle with a gasoline engine system on which tires having a size of 225/45R18 were mounted on four wheels. A traveling speed was from 40 km to 100 km at speed per hour. All of the respective tires had regular internal pressure. Based on data acquired during traveling, each of an estimated torsional resonance frequency (working example) of a tire (FL wheel) corrected by applying the method according to the embodiment and an estimated torsional resonance frequency (comparative example) of the tire before the correction in the method according to the embodiment was derived and they were compared.

<Experimental Result>

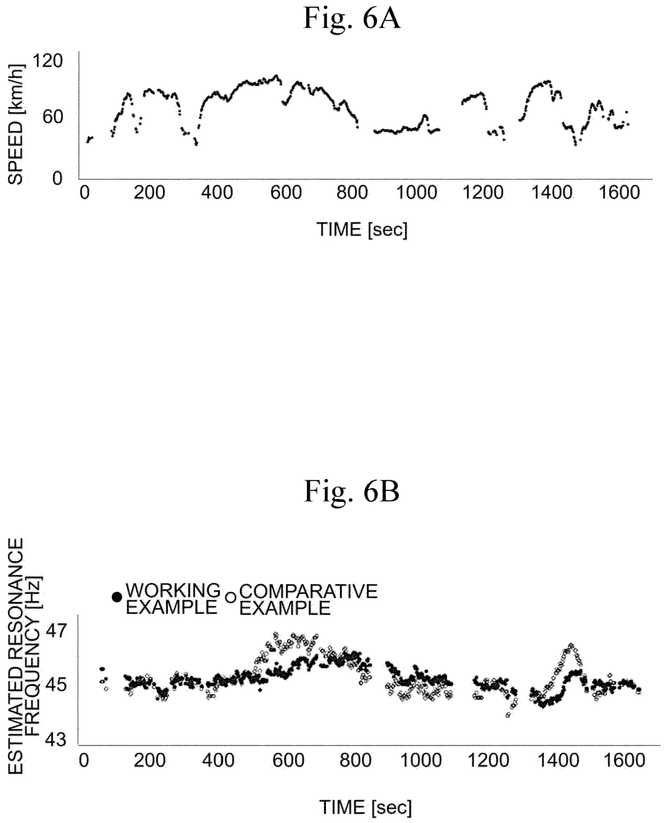

FIG. 6A is a graph plotting the vehicle speed in time series, and FIG. 6B is a graph plotting the estimated torsional resonance frequencies each derived by the methods according to the working example and the comparative example with respect to the same time axis as FIG. 6A. It can be confirmed from FIG. 6A and FIG. 6B that, near 1600 seconds and near 2400 seconds, while the estimated torsional resonance frequency according to the comparative example varies affected by noise, the estimated torsional resonance frequency according to the working example has a small variation and the influence of the noise can be reduced. Evaluation of the variations in the estimated torsional resonance frequencies with a histogram obtained results as in the following Table 1. As seen from Table 1, in the working example, a standard deviation reduced by about 35% and a quartile reduced by about 32% compared with the comparative example. This backed up the fact that the correction of the estimated torsional resonance frequency according to the embodiment reduces the variation and the torsional resonance frequency can be stably estimated.

[Table 1]

|  | Working Example | Comparative Example |
| --- | --- | --- |
| Average Value [Hz] | 45.3 | 45.3 |
| Standard Deviation [Hz] | 0.36 | 0.55 |
| Quartile [Hz] | 0.49 | 0.72 |

LIST OF REFERENCE NUMERALS

1    Vehicle
2    Monitoring device

20    Acquisition unit
21    Filtering unit
22    Estimation unit
23    Correction unit
f     Torsional resonance frequency of tire
fc    Center frequency of VBPF
fe    Estimated torsional resonance frequency
fe'   Corrected estimated torsional resonance frequency
B     Correction index

A monitoring device includes an acquisition unit, a filtering unit, an estimation unit, and a correction unit. The acquisition unit acquires time series data representing rotation information of a tire mounted on a vehicle during traveling of the vehicle. The filtering unit causes the time series data to pass through a variable band-pass filter to extract a frequency component in a predetermined frequency band near a resonance frequency of the tire from the time series data or causes the time series data to pass through a variable band-stop filter to remove the frequency component in the predetermined frequency band near the resonance frequency. The estimation unit estimates the resonance frequency of the tire based on the frequency component to derive an estimated resonance frequency. The correction unit corrects the estimated resonance frequency based on an area of a spectrum of the time series data in the predetermined frequency band.

**Claims**

1.  A monitoring device (2) that monitors a state of a vehicle (1) during traveling, comprising:

    an acquisition unit (20) that is configured to acquire time series data representing rotation information of a tire ($T_{FL}$, $T_{FR}$, $T_{RL}$, $T_{RR}$) mounted on the vehicle (1) during traveling of the vehicle (1);
    a filtering unit (21) that causes the time series data to pass through a variable band-pass filter to extract a frequency component in a predetermined frequency band near a resonance frequency of the tire ($T_{FL}$, $T_{FR}$, $T_{RL}$, $T_{RR}$) from the time series data, or causes the time series data to pass through a variable band-stop filter to remove the frequency component in the predetermined frequency band near the resonance frequency of the tire ($T_{FL}$, $T_{FR}$, $T_{RL}$, $T_{RR}$) from the time series data;
    an estimation unit (22) that estimates the resonance frequency of the tire ($T_{FL}$, $T_{FR}$, $T_{RL}$, $T_{RR}$) based on the frequency component to derive an estimated resonance frequency; and
    a correction unit (23) that corrects the estimated resonance frequency based on an area of a spectrum of the time series data in the predetermined frequency band.

2.  The monitoring device (2) according to claim 1,

    wherein the filtering unit (21) causes the time series data to pass through the variable band-pass filter to extract the frequency component in the predetermined frequency band from the time series data, and
    the correction unit (21) calculates a correction index as a ratio between an area of a spectrum of the time series data in a first frequency band at a low-frequency wave side from a center frequency of a passband of the variable band-pass filter and an area of a spectrum of the time series data in a second frequency band at a high-frequency wave side from the center frequency to correct the estimated resonance frequency based on the correction index.

3.  The monitoring device (2) according to claim 1 or 2, wherein the correction unit (23) corrects the estimated resonance frequency further based on a coefficient identifying a linear relationship between the estimated resonance frequency and the correction index.

4.  The monitoring device (2) according to claim 2, wherein the first frequency band and the second frequency band have widths of 6 Hz or more and 12 Hz or less.

5.  The monitoring device (2) according to any of claims 1 to 4, further comprising
    a pressure reduction detection unit (24) that detects a pressure reduction of the tire ($T_{FL}$, $T_{FR}$, $T_{RL}$, $T_{RR}$) based on the estimated resonance frequency corrected by the correction unit (23).

6.  A program that monitors a state of a vehicle during traveling, the program causing one or a plurality of computers to execute:

acquiring time series data representing rotation information of a tire mounted on the vehicle during traveling of the vehicle;
causing the time series data to pass through a variable band-pass filter to extract a frequency component in a predetermined frequency band near a resonance frequency of the tire from the time series data, or causing the time series data to pass through a variable band-stop filter to remove the frequency component in the predetermined frequency band near the resonance frequency of the tire from the time series data;
estimating the resonance frequency of the tire based on the frequency component to derive an estimated resonance frequency; and
correcting the estimated resonance frequency based on an area of a spectrum of the time series data in the predetermined frequency band.

7. A method that monitors a state of a vehicle during traveling, comprising:

acquiring time series data representing rotation information of a tire mounted on the vehicle during traveling of the vehicle;
causing the time series data to pass through a variable band-pass filter to extract a frequency component in a predetermined frequency band near a resonance frequency of the tire from the time series data, or causing the time series data to pass through a variable band-stop filter to remove the frequency component in the predetermined frequency band near the resonance frequency of the tire from the time series data;
estimating the resonance frequency of the tire based on the frequency component to derive an estimated resonance frequency; and
correcting the estimated resonance frequency based on an area of a spectrum of the time series data in the predetermined frequency band.

# Fig. 1

# Fig. 2

MONITORING DEVICE (CONTROL UNIT) 2

11

I/O INTERFACE

3

12

CPU

ACQUISITION PORTION 20

FILTERING UNIT 21

ESTIMATION UNIT 22

CORRECTION UNIT 23

PRESSURE REDUCTION DETECTION UNIT 24

PRESSURE REDUCTION ALARM UNIT 25

STORAGE DEVICE 15

RAM 14

ROM 13

9

PROGRAM

8

6
6
6
6

# Fig. 3

```
                    ┌─────────────┐
                    │    START    │
                    └──────┬──────┘
                           ↓
        ┌──────────────────────────────────┐
        │  ACQUIRE DATA REPRESENTING        │ ─ S1
        │  ROTATION INFORMATION OF TIRE     │
        └──────────────────┬───────────────┘
                           ↓
              ╱─────────────────────────╲
    NO       ╱        IS THE             ╲  ─ S2
    ←───────╱     NUMBER OF DATA          ╲
            ╲     CERTAIN AMOUNT OR       ╱
             ╲         MORE?            ╱
              ╲─────────────────────────╱
                           ↓ YES
        ┌──────────────────────────────────┐
        │  EXTRACT PREDETERMINED FREQUENCY  │ ─ S3
        │  COMPONENT FROM VBPF              │
        └──────────────────┬───────────────┘
                           ↓
        ┌──────────────────────────────────┐
        │  DERIVE ESTIMATED                 │ ─ S4
        │  RESONANCE FREQUENCY fe           │
        └──────────────────┬───────────────┘
                           ↓
        ┌──────────────────────────────────┐
        │  CALCULATE CORRECTION             │ ─ S5
        │  INDEX B                          │
        └──────────────────┬───────────────┘
                           ↓
        ┌──────────────────────────────────┐
        │  CORRECT ESTIMATED                │ ─ S6
        │  RESONANCE FREQUENCY fe           │
        └──────────────────┬───────────────┘
                           ↓
              ╱─────────────────────────╲
    NO       ╱          IS               ╲  ─ S7
    ←───────╱        PRESSURE             ╲
            ╲        REDUCED?             ╱
              ╲─────────────────────────╱
                           ↓ YES
        ┌──────────────────────────────────┐
        │  GENERATE AND OUTPUT              │ ─ S8
        │  PRESSURE REDUCTION               │
        │  ALARM                            │
        └──────────────────┬───────────────┘
                           ↓
                    ┌─────────────┐
                    │     END     │
                    └─────────────┘
```

# Fig. 4

# Fig. 5

## Fig. 6A

## Fig. 6B

Europäisches
Patentamt

European
Patent Office

Office européen
des brevets

**EUROPEAN SEARCH REPORT**

Application Number

EP 24 16 4744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 895 880 A2 (DENSO CORP [JP]) 10 February 1999 (1999-02-10) * paragraph [0066] - paragraph [0233]; figures 1-31 * | 1-7 | INV. B60C23/06 |
| A | JP 2017 140969 A (SUMITOMO RUBBER IND) 17 August 2017 (2017-08-17) * paragraph [0021] - paragraph [0048]; figures 1-4 * | 1-7 | |
| A | DE 10 2008 038579 A1 (CONTINENTAL TEVES AG & CO OHG [DE]) 5 March 2009 (2009-03-05) * paragraph [0084] - paragraph [0087]; figure 6 * | 1-7 | |

TECHNICAL FIELDS
SEARCHED      (IPC)

B60C

The present search report has been drawn up for all claims

| Place of search | Date of completion of the search | Examiner |
|---|---|---|
| Munich | 14 August 2024 | Billen, Karl |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 16 4744

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2024

| Patent document cited in search report | | Publication date | Patent family member(s) | | Publication date |
|---|---|---|---|---|---|
| EP 0895880 | A2 | 10-02-1999 | DE | 69824347 T2 | 16-06-2005 |
| | | | EP | 0895880 A2 | 10-02-1999 |
| | | | US | 6092028 A | 18-07-2000 |
| JP 2017140969 | A | 17-08-2017 | NONE | | |
| DE 102008038579 | A1 | 05-03-2009 | DE | 102008038579 A1 | 05-03-2009 |
| | | | EP | 2190682 A1 | 02-06-2010 |
| | | | US | 2010211250 A1 | 19-08-2010 |
| | | | WO | 2009030660 A1 | 12-03-2009 |

EPO FORM P0459

For more details about this annex : see Official Journal of the European Patent Office, No. 12/82

**REFERENCES CITED IN THE DESCRIPTION**

**Patent documents cited in the description**

- JP 2020026160 A
- JP 2011102077 A